# EUROPEAN PATENT APPLICATION

(11) **EP 3 297 228 A1**
(43) Date of publication of application: **21.03.2018**
(21) Application number: 15896766.1
(22) Date of filing: 30.06.2015
(51) Int. Cl.: H04L 12/741

(54) **FLOW TABLE AGEING METHOD, SWITCH AND CONTROLLER**

(71) Applicant: Huawei Technologies Co., Ltd., Longgang District Shenzhen, Guangdong 518129 (CN)
(72) Inventor: HU, Weiqi, Shenzhen Guangdong 518129 (CN)
(74) Representative: Körber, Martin Hans
(86) International application number: PCT/CN2015/082853
(87) International publication number: WO 2017/000235

(57) **Abstract**

Embodiments of the present invention provide a flow entry aging method, a switch, and a controller. The flow entry aging method of the present invention includes: obtaining, by a switch, an aging threshold of a flow entry, where the aging threshold includes a matching success threshold of the flow entry; matching, by the switch, the flow entry and a received data packet, and counting a matching success quantity; determining, by the switch, whether the matching success quantity reaches the matching success threshold, to obtain a determining result of the matching success threshold; and aging, by the switch, the flow entry according to the determining result of the matching success threshold. According to the embodiments of the present invention, aging precision of the flow entry can be improved, and wrong processing performed by the switch on the data packet can be reduced.

## Description

### TECHNICAL FIELD

Embodiments of the present invention relate to Internet technologies, and in particular, to a flow entry aging method, a switch, and a controller.

### BACKGROUND

Conventional network devices generally rely on special-purpose hardware to obtain higher performance. However, a network becomes more complex because of a loss of commonality. In software-defined networking (Software Defined Networking, SDN for short), a controller may call an application programming interface (Application Programming Interface, API for short) of an underlying hardware device for programming, so as to improve performance of a network device without a need to rely on special-purpose hardware.

In an SDN architecture, a controller (Controller) may configure multiple flow tables for a switch by using the OpenFlow (Openflow) protocol, so as to control forwarding of a data packet. Each flow table includes multiple flow entries. The switch (Switch) may forward a data packet according to a flow entry delivered by the controller, so as to decouple control and forwarding of the data packet. The controller may control a flow entry in a flow table (Flow Table) on the switch, so as to control a forwarding action of the switch. Different flow entries are corresponding to different forwarding processing rules, and different flow entries are required for processing data packets with different service requirements. As the switch supports increasingly more service requirements, the switch uses increasingly more flow entries to process data packets. Therefore, to ensure normal matching of a flow entry in a flow table on the switch, each flow entry needs to have an aging condition corresponding to the flow entry. The controller may determine, according to a matching status that is of each flow entry and that is reported by the switch, whether the flow entry meets the aging condition. If the controller determines that the flow entry meets the aging condition, the controller delivers an indication message to the switch, and the switch ages the flow entry, for example, deletes the flow entry.

That is, the controller needs to exchange signaling with the switch for multiple times, so as to age a flow entry. Because signaling exchange between the controller and the switch takes time, the switch cannot age the flow entry precisely, and this easily leads to wrong processing performed by the switch on a data packet.

### SUMMARY

Embodiments of the present invention provide a flow entry aging method, a switch, and a controller, to improve aging precision of a flow entry, and reduce wrong processing performed by the switch on a data packet.

According to a first aspect, an embodiment of the present invention provides a flow entry aging method, including:
obtaining, by a switch, an aging threshold of a flow entry, where the aging threshold includes a matching success threshold of the flow entry;
receiving, by the switch, a data packet;
matching, by the switch, the data packet and the flow entry, and counting a matching success quantity;
determining, by the switch, whether the matching success quantity reaches the matching success threshold, to obtain a determining result of the matching success threshold; and
aging, by the switch, the flow entry according to the determining result of the matching success threshold.

With reference to the first aspect, in a first implementable manner of the first aspect, the aging, by the switch, the flow entry according to the determining result of the matching success threshold includes:
aging, by the switch, the flow entry if the determining result of the matching success threshold is that the matching success quantity reaches the matching success threshold.

With reference to the first implementable manner of the first aspect, in a second implementable manner, the aging threshold further includes: a time threshold of the flow entry, and a taking-effect manner of the matching success threshold and the time threshold, and the taking-effect manner is that the matching success threshold first takes effect, and then the time threshold takes effect; and
the aging, by the switch, the flow entry if the determining result of the matching success threshold is that the matching success quantity reaches the matching success threshold includes:
if the determining result of the matching success threshold is that the matching success quantity reaches the matching success threshold, determining, by the switch, a time when the matching success quantity reaches the matching success threshold as a start time of an aging time of the flow entry;
determining, by the switch, whether the aging time reaches the time threshold; and
aging, by the switch, the flow entry if the aging time reaches the time threshold.

With reference to the second implementable manner of the first aspect, in a third implementable manner, after the aging, by the switch, the flow entry if the aging time reaches the time threshold, the method further includes:
sending, by the switch, an aging reason of the flow entry to a controller, where the aging reason includes: the aging time reaches the time threshold after the matching success quantity reaches the matching success threshold.

With reference to the first aspect, in a fourth implementable manner of the first aspect, the aging threshold further includes: a time threshold of the flow entry, the matching success threshold of the flow entry, and a taking-effect manner of the time threshold and the matching success threshold, and the taking-effect manner is that the matching success threshold and the time threshold simultaneously take effect;
before the aging, by the switch, the flow entry according to the determining result of the matching success threshold, the method further includes:
determining, by the switch, whether an aging time of the flow entry reaches the time threshold, to obtain a determining result of the time threshold, where a start time of the aging time is a time when the switch installs the flow entry; and
the aging, by the switch, the flow entry according to the determining result of the matching success threshold includes:
   aging, by the switch, the flow entry according to the determining result of the matching success threshold and the determining result of the time threshold.

With reference to the fourth implementable manner of the first aspect, in a fifth implementable manner, the aging, by the switch, the flow entry according to the determining result of the matching success threshold and the determining result of the time threshold includes:
aging, by the switch, the flow entry if the determining result of the matching success threshold is that the matching success quantity reaches the matching success threshold, and the determining result of the time threshold is that the aging time does not reach the time threshold.

With reference to the fifth implementable manner of the first aspect, in a sixth implementable manner, after the aging, by the switch, the flow entry if the determining result of the matching success threshold is that the matching success quantity reaches the matching success threshold, and the determining result of the time threshold is that the aging time does not reach the time threshold, the method further includes:
sending, by the switch, an aging reason of the flow entry to a controller, where the aging reason includes: the matching success quantity reaches the matching success threshold, but the aging time does not reach the time threshold.

With reference to the fourth implementable manner of the first aspect, in a seventh implementable manner, the aging, by the switch, the flow entry according to the determining result of the matching success threshold and the determining result of the time threshold includes:
aging, by the switch, the flow entry if the determining result of the matching success threshold is that the matching success quantity reaches the matching success threshold, and the determining result of the time threshold is that the aging time reaches the time threshold.

With reference to the seventh implementable manner of the first aspect, in an eighth implementable manner, after the aging, by the switch, the flow entry if the determining result of the matching success threshold is that the matching success quantity reaches the matching success threshold, and the determining result of the time threshold is that the aging time reaches the time threshold, the method further includes:
sending, by the switch, an aging reason of the flow entry to a controller, where the aging reason includes: the matching success quantity reaches the matching success threshold, and the aging time reaches the time threshold.

With reference to the fourth implementable manner of the first aspect, in a ninth implementable manner, the aging, by the switch, the flow entry according to the determining result of the matching success threshold and the determining result of the time threshold includes:
aging, by the switch, the flow entry if the determining result of the matching success threshold is that the matching success quantity does not reach the matching success threshold, and the determining result of the time threshold is that the aging time reaches the time threshold.

With reference to the ninth implementable manner of the first aspect, in a tenth implementable manner, after the aging, by the switch, the flow entry if the determining result of the matching success threshold is that the matching success quantity does not reach the matching success threshold, and the determining result of the time threshold is that the aging time reaches the time threshold, the method further includes:
sending, by the switch, an aging reason of the flow entry to a controller, where the aging reason includes: the matching success quantity does not reach the matching success threshold, but the aging time reaches the time threshold.

With reference to any one of the first aspect or the tenth implementable manner of the first aspect, in an eleventh implementable manner, the obtaining, by a switch, an aging threshold of a flow entry includes:
receiving, by the switch, the flow entry sent by the controller, where the flow entry includes the aging threshold.

With reference to a second aspect, an embodiment of the present invention provides a flow entry aging method, including:
determining, by a controller, an aging threshold of a flow entry, where the aging threshold includes a matching success threshold of the flow entry; and
sending, by the controller, the aging threshold of the flow entry to a switch, where the aging threshold of the flow entry is used to enable the switch to age the flow entry according to the matching success threshold.

With reference to the second aspect, in a first implementable manner of the second aspect, the aging threshold further includes: a time threshold of the flow entry, and a taking-effect manner of the matching success threshold and the time threshold, and the taking-effect manner is that the matching success threshold and the time threshold simultaneously take effect; and
the method further includes:
receiving, by the controller, an aging reason that is of the flow entry and that is sent by the switch, where
the aging reason includes: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, where a start time of the aging time is a time when the switch installs the flow entry.

With reference to the second aspect, in a second implementable manner of the second aspect, the aging threshold further includes: a time threshold of the flow entry, and a taking-effect manner of the matching success threshold and the time threshold, and the taking-effect manner is that the matching success threshold first takes effect, and then the time threshold takes effect; and
the method further includes:
receiving, by the controller, an aging reason that is of the flow entry and that is sent by the switch, where the aging reason includes: an aging time reaches the time threshold after a matching success quantity reaches the matching success threshold.

With reference to a third aspect, an embodiment of the present invention provides a switch, including:
an obtaining module, configured to obtain an aging threshold of a flow entry, where the aging threshold includes a matching success threshold of the flow entry;
a receiving module, configured to receive a data packet;
a matching module, configured to match the data packet and the flow entry;
a counting module, configured to count a matching success quantity;
a judging module, configured to determine whether the matching success quantity reaches the matching success threshold, to obtain a determining result of the matching success threshold; and
an aging module, configured to age the flow entry according to the determining result of the matching success threshold.

With reference to the third aspect, in a first implementable manner of the third aspect, the aging module is configured to age the flow entry if the determining result of the matching success threshold is that the matching success quantity reaches the matching success threshold.

With reference to the first implementable manner of the third aspect, in a second implementable manner, the aging threshold further includes: a time threshold of the flow entry, and a taking-effect manner of the matching success threshold and the time threshold, and the taking-effect manner is that the matching success threshold first takes effect, and then the time threshold takes effect; and
the switch further includes:
a determining module, configured to: if the determining result of the matching success threshold is that the matching success quantity reaches the matching success threshold, determine a time when the matching success quantity reaches the matching success threshold as a start time of an aging time of the flow entry, where
the judging module is further configured to determine whether the aging time reaches the time threshold; and
the aging module is further configured to age the flow entry if the aging time reaches the time threshold.

With reference to the second implementable manner of the third aspect, in a third implementable manner, the switch further includes:
a first sending module, configured to: after the aging module ages the flow entry, send an aging reason of the flow entry to a controller, where the aging reason includes: the aging time reaches the time threshold after the matching success quantity reaches the matching success threshold.

With reference to the third aspect, in a fourth implementable manner of the third aspect, the aging threshold further includes: a time threshold of the flow entry, the matching success threshold of the flow entry, and a taking-effect manner of the time threshold and the matching success threshold, and the taking-effect manner is that the matching success threshold and the time threshold simultaneously take effect;
the judging module is further configured to: before the aging module ages the flow entry according to the determining result of the matching success threshold, determine whether an aging time of the flow entry reaches the time threshold, to obtain a determining result of the time threshold, where a start time of the aging time is a time when the switch installs the flow entry; and
the aging module is further configured to age the flow entry according to the determining result of the matching success threshold and the determining result of the time threshold.

With reference to the fourth implementable manner of the third aspect, in a fifth implementable manner, the aging module is further configured to age the flow entry if the determining result of the matching success threshold is that the matching success quantity reaches the matching success threshold, and the determining result of the time threshold is that the aging time does not reach the time threshold.

With reference to the fifth implementable manner of the third aspect, in a sixth implementable manner, the switch further includes:
a second sending module, configured to: after the aging module ages the flow entry if the determining result of the matching success threshold is that the matching success quantity reaches the matching success threshold, and the determining result of the time threshold is that the aging time does not reach the time threshold, send an aging reason of the flow entry to a controller, where the aging reason includes: the matching success quantity reaches the matching success threshold, but the aging time does not reach the time threshold.

With reference to the fourth implementable manner of the third aspect, in a seventh implementable manner, the aging module is further configured to age the flow entry if the determining result of the matching success threshold is that the matching success quantity reaches the matching success threshold, and the determining result of the time threshold is that the aging time reaches the time threshold.

With reference to the seventh implementable manner of the third aspect, in an eighth implementable manner, the switch further includes:
a third sending module, configured to: after the aging module ages the flow entry if the determining result of the matching success threshold is that the matching success quantity reaches the matching success threshold, and the determining result of the time threshold is that the aging time reaches the time threshold, send an aging reason of the flow entry to a controller, where the aging reason includes: the matching success quantity reaches the matching success threshold, and the aging time reaches the time threshold.

With reference to the fourth implementable manner of the third aspect, in a ninth implementable manner, the aging module is further configured to age the flow entry if the determining result of the matching success threshold is that the matching success quantity does not reach the matching success threshold, and the determining result of the time threshold is that the aging time reaches the time threshold.

With reference to the ninth implementable manner of the third aspect, in a tenth implementable manner, the switch further includes:
a fourth sending module, configured to: after the aging module ages the flow entry if the determining result of the matching success threshold is that the matching success quantity does not reach the matching success threshold, and the determining result of the time threshold is that the aging time reaches the time threshold, send an aging reason of the flow entry to a controller, where the aging reason includes: the matching success quantity does not reach the matching success threshold, but the aging time reaches the time threshold.

With reference to any one of the third aspect to the tenth implementable manner of the third aspect, in an eleventh implementable manner, the receiving module is further configured to receive the flow entry sent by the controller, where the flow entry includes the aging threshold.

With reference to a fourth aspect, an embodiment of the present invention provides a controller, including:
a determining module, configured to determine an aging threshold of a flow entry, where the aging threshold includes a matching success threshold of the flow entry; and
a sending module, configured to send the aging threshold of the flow entry to a switch, where the aging threshold of the flow entry is used to enable the switch to age the flow entry according to the matching success threshold.

With reference to the fourth aspect, in a first implementable manner of the fourth aspect, the aging threshold further includes: a time threshold of the flow entry, and a taking-effect manner of the matching success threshold and the time threshold, and the taking-effect manner is that the matching success threshold and the time threshold simultaneously take effect; and
the controller further includes:
a first receiving module, configured to receive an aging reason that is of the flow entry and that is sent by the switch, where the aging reason includes: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, where a start time of the aging time is a time when the switch installs the flow entry.

With reference to the fourth aspect, in a second implementable manner of the fourth aspect, the aging threshold further includes: a time threshold of the flow entry, and a taking-effect manner of the matching success threshold and the time threshold, and the taking-effect manner is that the matching success threshold first takes effect, and then the time threshold takes effect; and
the controller further includes:
a second receiving module, configured to receive an aging reason that is of the flow entry and that is sent by the switch, where the aging reason includes: an aging time reaches the time threshold after a matching success quantity reaches the matching success threshold.

With reference to a fifth aspect, an embodiment of the present invention provides a switch, including a processor, a receiver, and a transmitter, where
the processor is configured to obtain an aging threshold of a flow entry, where the aging threshold includes a matching success threshold of the flow entry;
the receiver is configured to receive a data packet; and
the processor is further configured to: match the data packet and the flow entry, and count a matching success quantity; determine whether the matching success quantity reaches the matching success threshold, to obtain a determining result of the matching success threshold; and age the flow entry according to the determining result of the matching success threshold.

With reference to the fifth aspect, in a first implementable manner of the fifth aspect, the processor is further configured to age the flow entry if the determining result of the matching success threshold is that the matching success quantity reaches the matching success threshold.

With reference to the first implementable manner of the fifth aspect, in a second implementable manner, the aging threshold further includes: a time threshold of the flow entry, and a taking-effect manner of the matching success threshold and the time threshold, and the taking-effect manner is that the matching success threshold first takes effect, and then the time threshold takes effect; and
the processor is further configured to: if the determining result of the matching success threshold is that the matching success quantity reaches the matching success threshold, determine a time when the matching success quantity reaches the matching success threshold as a start time of an aging time of the flow entry; determine whether the aging time reaches the time threshold; and age the flow entry if the aging time reaches the time threshold.

With reference to the second implementable manner of the fifth aspect, in a third implementable manner, the transmitter is configured to send an aging reason of the flow entry to a controller, where the aging reason includes: the aging time reaches the time threshold after the matching success quantity reaches the matching success threshold.

With reference to the fifth aspect, in a fourth implementable manner of the fifth aspect, the aging threshold further includes: a time threshold of the flow entry, the matching success threshold of the flow entry, and a taking-effect manner of the time threshold and the matching success threshold, and the taking-effect manner is that the matching success threshold and the time threshold simultaneously take effect; and
the processor is further configured to: before aging the flow entry according to the determining result of the matching success threshold, determine whether an aging time of the flow entry reaches the time threshold, to obtain a determining result of the time threshold, where a start time of the aging time is a time when the switch installs the flow entry; and age the flow entry according to the determining result of the matching success threshold and the determining result of the time threshold.

With reference to the fourth implementable manner of the fifth aspect, in a fifth implementable manner, the processor is further configured to age the flow entry if the determining result of the matching success threshold is that the matching success quantity reaches the matching success threshold, and the determining result of the time threshold is that the aging time does not reach the time threshold.

With reference to the fifth implementable manner of the fifth aspect, in a sixth implementable manner, the transmitter is further configured to send an aging reason of the flow entry to a controller, where the aging reason includes: the matching success quantity reaches the matching success threshold, but the aging time does not reach the time threshold.

With reference to the fourth implementable manner of the fifth aspect, in a seventh implementable manner, the processor is further configured to age the flow entry if the determining result of the matching success threshold is that the matching success quantity reaches the matching success threshold, and the determining result of the time threshold is that the aging time reaches the time threshold.

With reference to the seventh implementable manner of the fifth aspect, in an eighth implementable manner, the transmitter is further configured to send an aging reason of the flow entry to a controller, where the aging reason includes: the matching success quantity reaches the matching success threshold, and the aging time reaches the time threshold.

With reference to the fourth implementable manner of the fifth aspect, in a ninth implementable manner, the processor is further configured to age the flow entry if the determining result of the matching success threshold is that the matching success quantity does not reach the matching success threshold, and the determining result of the time threshold is that the aging time reaches the time threshold.

With reference to the ninth implementable manner of the fifth aspect, in a tenth implementable manner, the transmitter is further configured to send an aging reason of the flow entry to a controller, where the aging reason includes: the matching success quantity does not reach the matching success threshold, but the aging time reaches the time threshold.

With reference to any one of the fifth aspect to the tenth implementable manner of the fifth aspect, in an eleventh implementable manner, the receiver is further configured to receive the flow entry sent by the controller, where the flow entry includes the aging threshold.

With reference to a sixth aspect, an embodiment of the present invention provides a controller, including a processor, a receiver, and a transmitter, where
the processor is configured to determine an aging threshold of a flow entry, where the aging threshold includes a matching success threshold of the flow entry; and
the transmitter is configured to send the aging threshold of the flow entry to a switch, where the aging threshold of the flow entry is used to enable the switch to age the flow entry according to the matching success threshold.

With reference to the sixth aspect, in a first implementable manner of the sixth aspect, the aging threshold further includes: a time threshold of the flow entry, and a taking-effect manner of the matching success threshold and the time threshold, and the taking-effect manner is that the matching success threshold and the time threshold simultaneously take effect; and
the receiver is configured to receive an aging reason that is of the flow entry and that is sent by the switch, where the aging reason includes: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, where a start time of the aging time is a time when the switch installs the flow entry.

With reference to the sixth aspect, in a second implementable manner of the sixth aspect, the aging threshold further includes: a time threshold of the flow entry, and a taking-effect manner of the matching success threshold and the time threshold, and the taking-effect manner is that the matching success threshold first takes effect, and then the time threshold takes effect; and
the receiver is further configured to receive an aging reason that is of the flow entry and that is sent by the switch, where the aging reason includes: an aging time reaches the time threshold after a matching success quantity reaches the matching success threshold.

With reference to the flow entry aging method, the switch, and the controller in the embodiments of the present invention, the switch may determine whether the matching success quantity of matching the flow entry and the data packet reaches the matching success threshold, so as to determine whether the flow entry meets the aging condition. If the matching success quantity reaches the matching success threshold, the flow entry meets the aging condition, and the switch ages the flow entry. The switch not only determines aging of the flow entry, but also ages the flow entry. Therefore, interaction between the switch and the controller can be reduced, aging precision of the flow entry can be improved, and wrong processing performed by the switch on the data packet can be reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of a system architecture of an SDN network used in the embodiments of the present invention;
FIG. 2 is a schematic diagram of a procedure in which a switch processes a data packet according to an embodiment of the present invention;
FIG. 3 is a schematic diagram of parameters of a flow entry according to an embodiment of the present invention;
FIG. 4 is a flowchart of a flow entry aging method according to Embodiment 1 of the present invention;
FIG. 5 is a flowchart of a flow entry aging method according to Embodiment 2 of the present invention;
FIG. 6 is a flowchart of a flow entry aging method according to Embodiment 3 of the present invention;
FIG. 7 is a schematic diagram of parameters of a flow entry according to Embodiment 3 of the present invention;
FIG. 8 is a schematic diagram of parameters of another flow entry according to Embodiment 3 of the present invention;
FIG. 9 is a flowchart of a flow entry aging method according to Embodiment 4 of the present invention;
FIG. 10 is a signaling flowchart of a flow entry aging method according to Embodiment 5 of the present invention;
FIG. 11A and FIG. 11B are a signaling flowchart of another flow entry aging method according to Embodiment 5 of the present invention;
FIG. 12A and FIG. 12B are a signaling flowchart of still another flow entry aging method according to Embodiment 5 of the present invention;
FIG. 13 is a schematic structural diagram of a switch according to Embodiment 6 of the present invention;
FIG. 14 is a schematic structural diagram of a controller according to Embodiment 7 of the present invention;
FIG. 15 is a schematic structural diagram of a switch according to Embodiment 8 of the present invention; and
FIG. 16 is a schematic structural diagram of a controller according to Embodiment 9 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

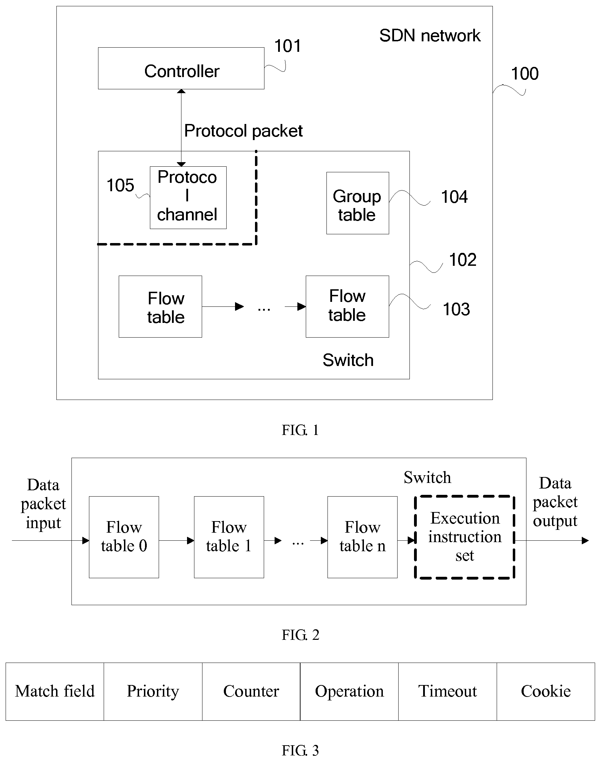

Solutions of the embodiments of the present invention are applicable to a scenario of flow entry aging between a controller and a switch in an SDN network architecture that is based on the OpenFlow protocol. FIG. 1 is a schematic diagram of a system architecture of an SDN network used in the embodiments of the present invention. As shown in FIG. 1, the SDN network 100 may include a controller 101 and a switch 102. The controller 101 and the switch 102 may interact by using a protocol packet, and the protocol packet may be an OpenFlow protocol packet. The switch 102 may be an OpenFlow switch. The switch 102 stores multiple flow tables 103 and a group table (Group Table) 104. The switch 102 processes a received data packet according to at least one flow table in the multiple flow tables 103. Each flow table in the multiple flow tables 103 stores multiple flow entries that are received by the switch 102 and that are sent by the controller 101 by using the OpenFlow protocol. The switch 102 further has a protocol channel 105, and the protocol channel 105 may be an OpenFlow protocol channel. The switch 102 may receive, by using the protocol channel 105, a protocol packet sent by the controller 101, or send a protocol packet to the controller 101 by using the protocol channel 105.

For example, a switch is configured with n+1 flow tables that are a flow table 0 to a flow table n. FIG. 2 is a schematic diagram of a procedure in which a switch processes a data packet according to an embodiment of the present invention. As shown in FIG. 2, the switch may sequentially process each data packet in data packets according to at least one flow table that includes the flow table 0. The switch determines an operation that matches a flow entry in each flow table, determines a corresponding operation instruction in an execution instruction set (Execute Action Set) according to the operation that matches the flow entry in each flow table, processes the data packet according to the corresponding operation instruction in the execution instruction set, and outputs the data packet, thereby implementing forwarding of the data packet.

Each flow table may include multiple flow entries, and each flow entry includes multiple parameters. FIG. 3 is a schematic diagram of parameters of a flow entry according to an embodiment of the present invention. As shown in FIG. 3, each flow entry may include: a match field (Match Fields), a priority (Priority), a counter (Counters), an operation (Instructions), a timeout (Timeouts), and a cookie (Cookie).

The match field may be an identifier of the flow entry. The priority may be a matching priority of the flow entry. The counter is used to count statistical data of the flow entry. The operation is an operation that needs to be performed when the flow entry is successfully matched. The timeout includes an installation timeout (hard_timeouts) and an idle timeout (idle_timeouts). The installation timeout refers to a time from installing the flow entry to aging the flow entry. The idle timeout refers to a time from a moment of last successful matching performed by a switch on the flow entry to a moment of aging the flow entry. The cookie may be an opaque value selected by a controller, and is used to enable the controller to perform an operation on the switch, for example, count data of the flow entry, or change or delete the flow entry.

For each flow table, the switch may sequentially perform matching of each flow entry according to priorities of multiple flow entries of each flow table. When performing matching of a flow entry, the switch may perform matching of the flow entry according to each parameter in a match field of the flow entry and a received data packet. If the flow entry is successfully matched, the switch may determine, according to an operation (Instructions) of the successfully matched flow entry, an operation that needs to be performed when the flow entry is successfully matched, for example, modifying metadata (Metadata) or operating an action (Action) list.

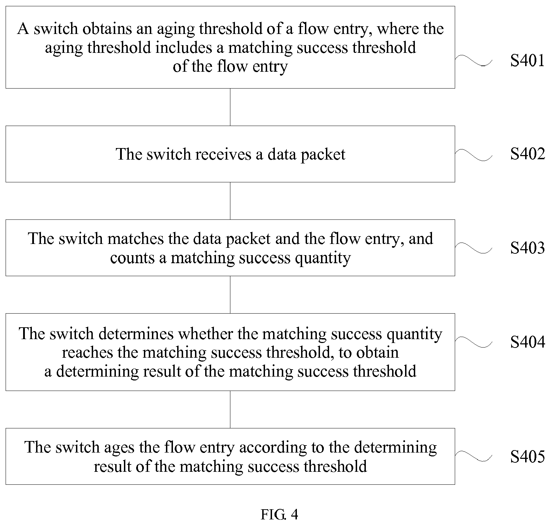

FIG. 4 is a flowchart of a flow entry aging method according to Embodiment 1 of the present invention. As shown in FIG. 4, the method may include the following steps.

S401. A switch obtains an aging threshold of a flow entry, where the aging threshold includes a matching success threshold of the flow entry.

The aging threshold (Aging Threshold) may be an aging threshold that is preconfigured on the switch side, or may be an aging threshold that is received by the switch and that is sent by another device such as a controller. The aging threshold may be represented by using a preset value of an original parameter of the flow entry, or may be represented by using a value of a parameter obtained by expanding an original parameter such as a timeout of the flow entry. A specific value of the matching success threshold may be determined, for example, according to an application requirement corresponding to a service data packet processed by the switch.

S402. The switch receives a data packet.

S403. The switch matches the data packet and the flow entry, and counts a matching success quantity.

The switch may match the data packet and the flow entry. If the switch successfully matches the data packet and the flow entry, the switch counts the matching success quantity. The switch may perform matching, for example, according to a parameter in a match field of the flow entry and a corresponding parameter in the received data packet, thereby performing matching on the flow entry. The parameter in the match field of the flow entry may include, for example, a source address and a destination address. If the switch determines that both the source address and the destination address are the same as a source address and a destination address that are corresponding to the data packet, the switch may determine that the flow entry and the data packet are successfully matched. If the switch performs successful matching on the flow entry according to the data packet, the switch further needs to count the matching success quantity.

S404. The switch determines whether the matching success quantity reaches the matching success threshold, to obtain a determining result of the matching success threshold.

The switch may compare the matching success quantity of the flow entry with the matching success threshold, so as to determine whether the matching success quantity reaches the matching success threshold. If the matching success quantity is equal to the matching success threshold, the determining result of the matching success threshold is that the matching success quantity reaches the matching success threshold. Correspondingly, if the matching success quantity is less than the matching success threshold, the determining result of the matching success threshold is that the matching success quantity does not reach the matching success threshold.

S405. The switch ages the flow entry according to the determining result of the matching success threshold.

The switch may determine, according to different determining results of the matching success threshold by separately using different manners, whether the flow entry meets an aging condition. If the flow entry meets the aging condition, the switch may age the flow entry, for example, delete the flow entry.

According to the flow entry aging method provided in this embodiment of the present invention, the switch may determine whether the matching success quantity of matching the flow entry and the data packet reaches the matching success threshold, obtain the determining result of the matching success threshold, determine, according to the determining result of the matching success threshold, whether the flow entry meets the aging condition, and if the flow entry meets the aging condition, age the flow entry. The switch not only determines aging of the flow entry, but also ages the flow entry. Therefore, interaction between the switch and the controller can be reduced, and aging precision of the flow entry can be improved, thereby reducing wrong processing performed by the switch on the data packet.

Embodiment 2 of the present invention further provides a flow entry aging method. Optionally, in the method, based on Embodiment 1, that the switch ages the flow entry according to the determining result of the matching success threshold in S405 may include:
The switch ages the flow entry if the determining result of the matching success threshold is that the matching success quantity reaches the matching success threshold.

For example, the flow entry aging method in Embodiment 2 of the present invention may be applied to a scenario of charging based on service duration. In the scenario of charging based on service duration, a flow entry of a time recording operation is matched only when a data packet of a service is first received. The time recording operation does not need to be performed on a subsequently received data packet. That is, the flow entry of the time recording operation can be matched only once. Therefore, in this scenario, the matching success threshold may be set to 1. Provided that the switch performs successful matching on the flow entry according to the data packet, that is, the matching success quantity is 1, the flow entry may be aged, so that aging of the flow entry can be more precise.

Optionally, the aging threshold may further include: a time threshold of the flow entry, and a taking-effect manner of the matching success threshold and the time threshold. The taking-effect manner may be that the matching success threshold first takes effect, and then the time threshold takes effect.

A specific value of the time threshold may be determined by the controller according to an application requirement corresponding to a service data packet processed by the switch. If the aging threshold of the flow entry includes multiple thresholds, for example, the matching success threshold and the time threshold, the aging threshold may further include a taking-effect manner (Effection mode) of the matching success threshold and the time threshold. The taking-effect manner of the matching success threshold and the time threshold may be an aging priority of the matching success threshold and the time threshold. For example, if the matching success threshold and the time threshold sequentially take effect, determining may be sequentially performed according to a sequence of the matching success threshold and the time threshold. When both the matching success threshold and the time threshold meet a requirement, the flow entry can be aged.

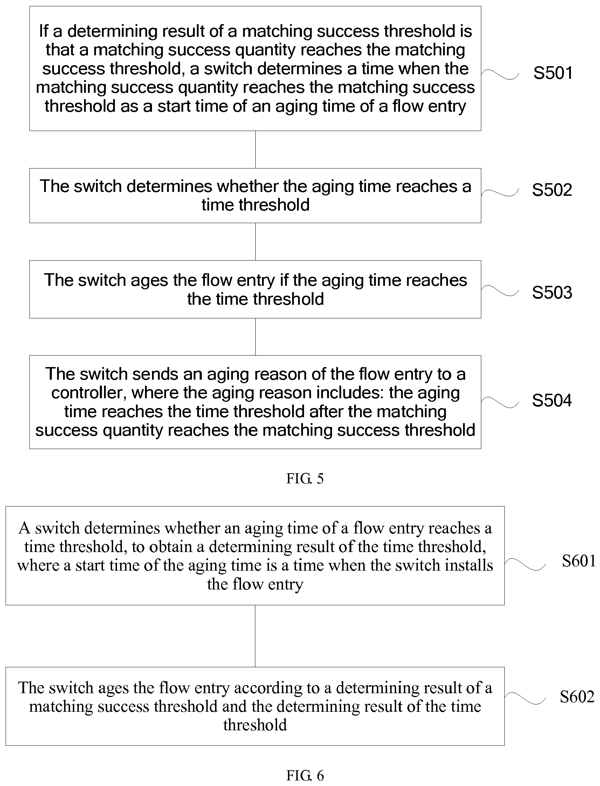

FIG. 5 is a flowchart of the flow entry aging method according to Embodiment 2 of the present invention. As shown in FIG. 5, in the foregoing step in the method, that the switch ages the flow entry if the determining result of the matching success threshold is that the matching success quantity reaches the matching success threshold may include:
S501. If the determining result of the matching success threshold is that the matching success quantity reaches the matching success threshold, the switch determines a time when the matching success quantity reaches the matching success threshold as a start time of an aging time of the flow entry.

S502. The switch determines whether the aging time reaches a time threshold.

S503. The switch ages the flow entry if the aging time reaches the time threshold.

That is, in the flow entry aging method in Embodiment 2 of the present invention, the matching success threshold may be added, and the time threshold may be retained as the aging condition of the flow entry. That is, the aging condition of the flow entry may include the matching success threshold and the time threshold. If the taking-effect manner is taking effect sequentially, that is, the matching success threshold first takes effect, and then the time threshold takes effect, the matching success threshold and the time threshold sequentially meet the requirement. That is, if the aging time reaches the aging threshold after the matching success quantity reaches the matching success threshold, the switch may age the flow entry.

Optionally, after S503 in which the switch ages the flow entry if the aging time reaches the time threshold, the method may further include:
S504. The switch sends an aging reason of the flow entry to a controller, where the aging reason includes: the aging time reaches the time threshold after the matching success quantity reaches the matching success threshold.

When the aging threshold includes multiple thresholds, the switch further needs to notify the controller of an actual aging reason of the flow entry after aging the flow entry.

According to the flow entry aging method provided in Embodiment 2 of the present invention based on Embodiment 1, the aging threshold may include the matching success threshold and the time threshold, and the taking-effect manner of the matching success threshold and the time threshold is that the matching success threshold first takes effect, and then the time threshold takes effect. Therefore, after determining that the matching success quantity reaches the matching success threshold, the switch may age the flow entry only after determining that the aging time reaches the time threshold, so that the switch can age the flow entry more precisely.

Embodiment 3 of the present invention provides a flow entry aging method. The method is based on the method in Embodiment 1. Alternatively, the aging threshold further includes: a time threshold of the flow entry, the matching success threshold of the flow entry, and a taking-effect manner of the time threshold and the matching success threshold, and the taking-effect manner is that the matching success threshold and the time threshold simultaneously take effect. FIG. 6 is a flowchart of the flow entry aging method according to Embodiment 3 of the present invention. As shown in FIG. 6, before S405 in which the switch ages the flow entry according to the determining result of the matching success threshold in Embodiment 1, the method may further include:
S601. The switch determines whether an aging time of the flow entry reaches a time threshold, to obtain a determining result of the time threshold, where a start time of the aging time is a time when the switch installs the flow entry.

Correspondingly, that the switch ages the flow entry according to the determining result of the matching success threshold in S405 may include:
S602. The switch ages the flow entry according to the determining result of the matching success threshold and the determining result of the time threshold.

Optionally, that the switch ages the flow entry according to the determining result of the matching success threshold and the determining result of the time threshold in S602 may include:
The switch ages the flow entry if the determining result of the matching success threshold is that the matching success quantity reaches the matching success threshold, and the determining result of the time threshold is that the aging time does not reach the time threshold.

Correspondingly, after the switch ages the flow entry if the determining result of the matching success threshold is that the matching success quantity reaches the matching success threshold, and the determining result of the time threshold is that the aging time does not reach the time threshold, the method may include:
The switch sends an aging reason of the flow entry to the controller, where the aging reason includes: the matching success quantity reaches the matching success threshold, but the aging time does not reach the time threshold.

Alternatively, that the switch ages the flow entry according to the determining result of the matching success threshold and the determining result of the time threshold in S602 may include:
The switch ages the flow entry if the determining result of the matching success threshold is that the matching success quantity reaches the matching success threshold, and the determining result of the time threshold is that the aging time reaches the time threshold.

Correspondingly, after the switch ages the flow entry if the determining result of the matching success threshold is that the matching success quantity reaches the matching success threshold, and the determining result of the time threshold is that the aging time reaches the time threshold, the method may include:
The switch sends an aging reason of the flow entry to the controller, where the aging reason includes: the aging time reaches the time threshold, and the aging time reaches the time threshold.

Alternatively, that the switch ages the flow entry according to the determining result of the matching success threshold and the determining result of the time threshold in S602 may include:
The switch ages the flow entry if the determining result of the matching success threshold is that the matching success quantity does not reach the matching success threshold, and the determining result of the time threshold is that the aging time reaches the time threshold.

Optionally, after the switch ages the flow entry if the determining result of the matching success threshold is that the matching success quantity does not reach the matching success threshold, and the determining result of the time threshold is that the aging time reaches the time threshold, the method may further include:
The switch sends an aging reason of the flow entry to the controller, where the aging reason includes: the matching success quantity does not reach the matching success threshold, but the aging time reaches the time threshold.

Optionally, that a switch obtains an aging threshold of a flow entry in S401 in Embodiment 1 may include:
The switch receives the flow entry sent by the controller, where the flow entry includes the aging threshold.

That is, the aging threshold may be sent by the controller by sending the flow entry.

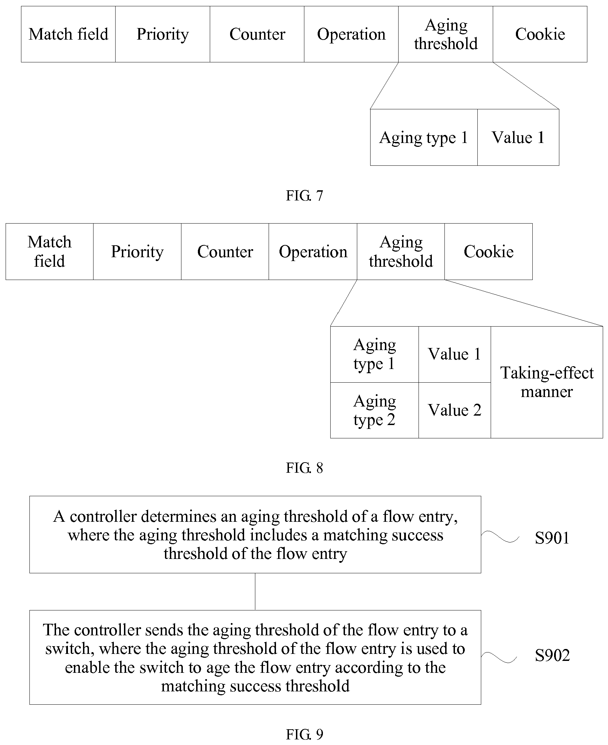

It should be noted that the flow entry may further include an aging type (Aging Type). FIG. 7 is a schematic diagram of parameters of a flow entry according to Embodiment 3 of the present invention. As shown in FIG. 7, the flow entry may include: a match field, a priority, a counter, an operation, an aging threshold, and a cookie. The aging threshold may include an aging type 1 and a value 1 (Value 1). The aging type 1 (Aging Type 1) may be a type corresponding to the matching success threshold, for example, a count (count). The value 1 may be a matching success quantity corresponding to the matching success threshold.

The aging threshold of the flow entry may further include the time threshold. If the aging threshold includes the time threshold, the flow entry may further include an aging type corresponding to the time threshold. The aging type corresponding to the time threshold may be a time (Time). FIG. 8 is a schematic diagram of parameters of another flow entry according to Embodiment 3 of the present invention. As shown in FIG. 8, the flow entry may include: a match field, a priority, a counter, an operation, an aging threshold, and a cookie. The aging threshold may include an aging type 1 and a value 1. The aging type 1 may be a type corresponding to the matching success threshold, for example, a count. The value 1 may be a matching success quantity corresponding to the matching success threshold. The aging threshold may further include an aging type 2 and a value 2. The aging type 2 may be a type corresponding to the time threshold, for example, a time. The value 2 is a time corresponding to the time threshold. If the aging threshold of the flow entry includes multiple thresholds, for example, the matching success threshold and the time threshold, the aging threshold may further include a taking-effect manner (Effection mode) of the matching success threshold and the time threshold. The taking-effect manner of the matching success threshold and the time threshold may be an aging priority of the matching success threshold and the time threshold.

According to the flow entry aging method provided in Embodiment 3 of the present invention, the switch not only determines aging of the flow entry, but also ages the flow entry. Therefore, a time occupied by interaction between the switch and the controller can be reduced, and aging precision of the flow entry can be improved, thereby reducing wrong processing performed by the switch on the data packet. In addition, the aging threshold may include the matching success threshold and the time threshold, and the taking-effect manner of the matching success threshold and the time threshold is that the matching success threshold and the time threshold simultaneously take effect. Therefore, the switch may age the flow entry when determining that the matching success quantity reaches the matching success threshold, or the aging time reaches the time threshold, so that the switch can age the flow entry more precisely and more flexibly.

Embodiment 4 of the present invention further provides a flow entry aging method. The flow entry aging method in Embodiment 4 may be performed by a controller. FIG. 9 is a flowchart of the flow entry aging method according to Embodiment 4 of the present invention. As shown in FIG. 9, the method may include the following steps.

S901. The controller determines an aging threshold of a flow entry, where the aging threshold includes a matching success threshold of the flow entry.

The controller may determine the aging threshold of the flow entry according to a service requirement corresponding to a service executed by a switch.

S902. The controller sends the aging threshold of the flow entry to a switch, where the aging threshold of the flow entry is used to enable the switch to age the flow entry according to the matching success threshold.

Optionally, the aging threshold may further include: a time threshold of the flow entry, and a taking-effect manner of the matching success threshold and the time threshold. Optionally, the taking-effect manner is that the matching success threshold and the time threshold simultaneously take effect.

Optionally, the method further includes:
The controller receives an aging reason that is of the flow entry and that is sent by the switch, where the aging reason includes: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, where a start time of the aging time is a time when the switch installs the flow entry.

Optionally, the aging threshold further includes: a time threshold of the flow entry, and a taking-effect manner of the matching success threshold and the time threshold, and the taking-effect manner is that the matching success threshold first takes effect, and then the time threshold takes effect. The method further includes:
The controller receives an aging reason that is of the flow entry and that is sent by the switch, where the aging reason includes: an aging time reaches the time threshold after a matching success quantity reaches the matching success threshold.

The flow entry aging method provided in Embodiment 4 of the present invention is a flow entry aging method performed by the controller, that is, a peer device of the flow entry aging method performed by the switch in Embodiment 1 to Embodiment 3. Specific details and beneficial effects of the method are similar to those of the foregoing embodiments, and the details are not described herein.

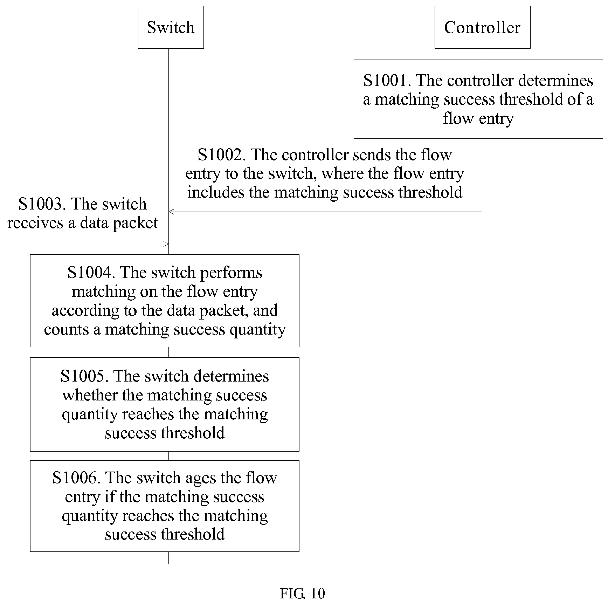

Embodiment 5 of the present invention further provides a flow entry aging method. The method may be performed by a controller and a switch through interaction. FIG. 10 is a signaling flowchart of the flow entry aging method according to Embodiment 5 of the present invention. As shown in FIG. 10, the method may include the following steps:
S1001. The controller determines a matching success threshold of a flow entry.
S1002. The controller sends the flow entry to the switch, where the flow entry includes the matching success threshold.
S 1003. The switch receives a data packet.
S1004. The switch performs matching on the flow entry according to the data packet, and counts a matching success quantity.
S1005. The switch determines whether the matching success quantity reaches the matching success threshold.
S1006. The switch ages the flow entry if the matching success quantity reaches the matching success threshold.

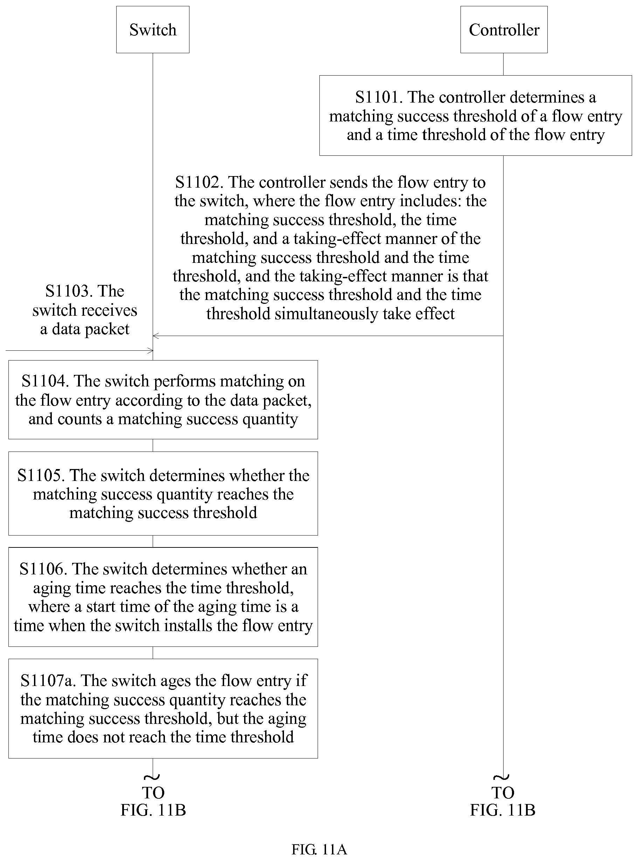

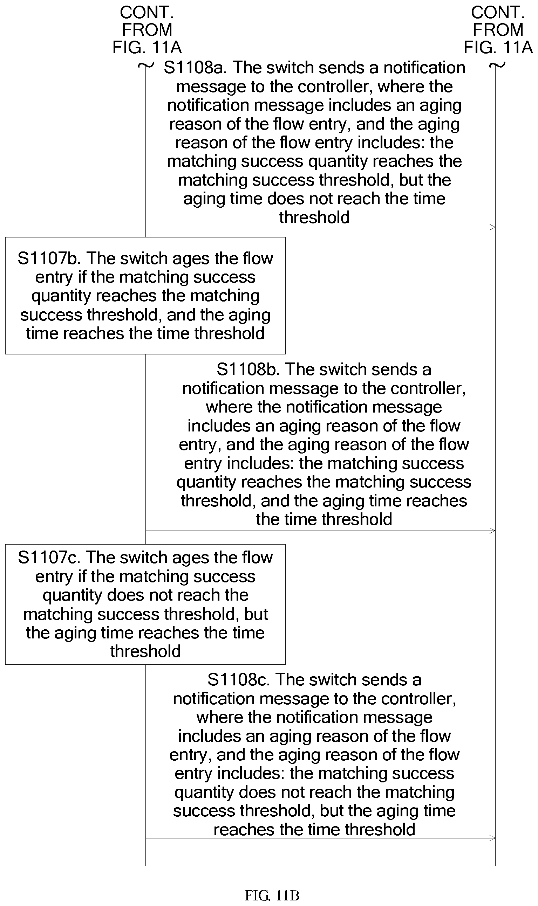

Embodiment 5 of the present invention further provides another flow entry aging method. FIG. 11A and FIG. 11B are a signaling flowchart of the another flow entry aging method according to Embodiment 5 of the present invention. As shown in FIG. 11A and FIG. 11B, the method may include the following steps:
S1101. A controller determines a matching success threshold of a flow entry and a time threshold of the flow entry.
S1102. The controller sends the flow entry to a switch, where the flow entry includes: the matching success threshold, the time threshold, and a taking-effect manner of the matching success threshold and the time threshold, and the taking-effect manner is that the matching success threshold and the time threshold simultaneously take effect.
S 1103. The switch receives a data packet.
S1104. The switch performs matching on the flow entry according to the data packet, and counts a matching success quantity.
S1105. The switch determines whether the matching success quantity reaches the matching success threshold.
S1106. The switch determines whether an aging time reaches the time threshold, where a start time of the aging time is a time when the switch installs the flowentry.
S1107a. The switch ages the flow entry if the matching success quantity reaches the matching success threshold, but the aging time does not reach the time threshold.
S1108a. The switch sends a notification message to the controller, where the notification message includes an aging reason of the flow entry, and the aging reason of the flow entry includes: the matching success quantity reaches the matching success threshold, but the aging time does not reach the time threshold.
S1107b. The switch ages the flow entry if the matching success quantity reaches the matching success threshold, and the aging time reaches the time threshold.
S1108b. The switch sends a notification message to the controller, where the notification message includes an aging reason of the flow entry, and the aging reason of the flow entry includes: the matching success quantity reaches the matching success threshold, and the aging time reaches the time threshold.
S1107c. The switch ages the flow entry if the matching success quantity does not reach the matching success threshold, but the aging time reaches the time threshold.
S1108c. The switch sends a notification message to the controller, where the notification message includes an aging reason of the flow entry, and the aging reason of the flow entry includes: the matching success quantity does not reach the matching success threshold, but the aging time reaches the time threshold.

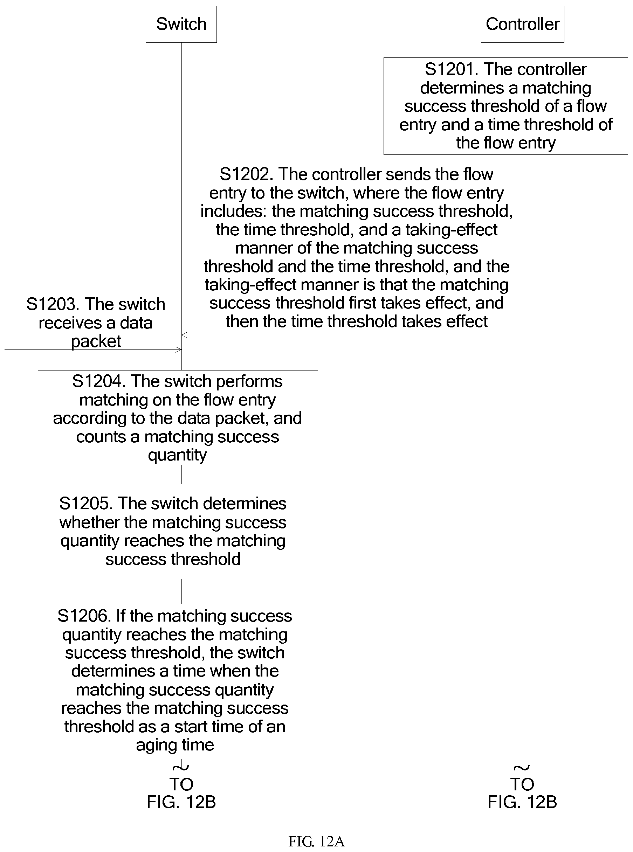

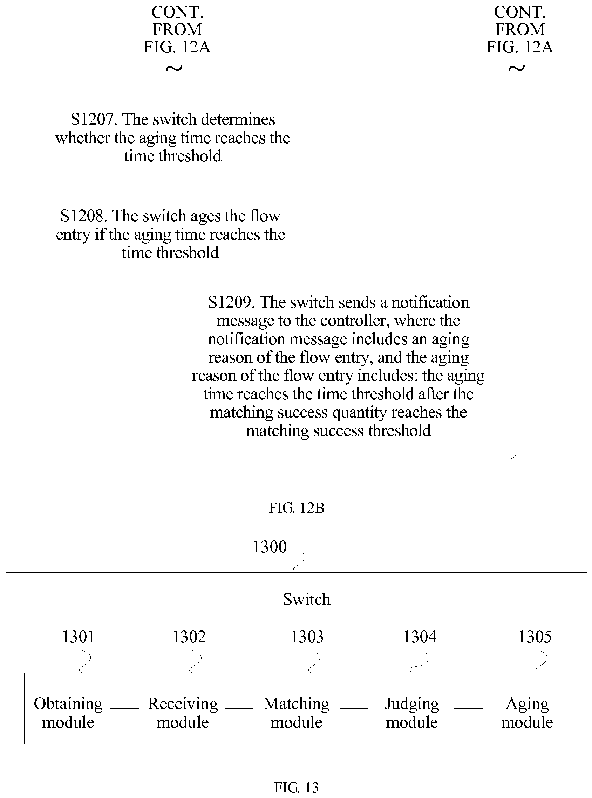

Embodiment 5 of the present invention further provides still another flow entry aging method. FIG. 12A and FIG. 12B are a signaling flowchart of the still another flow entry aging method according to Embodiment 5 of the present invention. As shown in FIG. 12A and FIG. 12B, the method may include the following steps:
S1201. A controller determines a matching success threshold of a flow entry and a time threshold of the flow entry.
S1202. The controller sends the flow entry to a switch, where the flow entry includes: the matching success threshold, the time threshold, and a taking-effect manner of the matching success threshold and the time threshold, and the taking-effect manner is that the matching success threshold first takes effect, and then the time threshold takes effect.
S 1203. The switch receives a data packet.
S1204. The switch performs matching on the flow entry according to the data packet, and counts a matching success quantity.
S1205. The switch determines whether the matching success quantity reaches the matching success threshold.
S1206. If the matching success quantity reaches the matching success threshold, the switch determines a time when the matching success quantity reaches the matching success threshold as a start time of an aging time.
S 1207. The switch determines whether the aging time reaches the time threshold.
S 1208. The switch ages the flow entry if the aging time reaches the time threshold.
S1209. The switch sends a notification message to the controller, where the notification message includes an aging reason of the flow entry, and the aging reason of the flow entry includes: the aging time reaches the time threshold after the matching success quantity reaches the matching success threshold.

According to the multiple flow entry aging methods provided in Embodiment 5 of the present invention, implementation processes and beneficial effects of the methods are similar to those of the foregoing embodiments, and details are not described herein.

### Embodiment 6

Embodiment 6 of the present invention further provides a switch. FIG. 13 is a schematic structural diagram of the switch according to Embodiment 6 of the present invention. As shown in FIG. 13, the switch 1300 may include: an obtaining module 1301, a receiving module 1302, a matching module 1303, a judging module 1304, and an aging module 1305.

The obtaining module 1301 is configured to obtain an aging threshold of a flow entry, where the aging threshold includes a matching success threshold of the flow entry.

The receiving module 1302 is configured to receive a data packet.

The matching module 1303 is configured to: match the data packet and the flow entry, and count a matching success quantity.

The judging module 1304 is configured to determine whether the matching success quantity reaches the matching success threshold, to obtain a determining result of the matching success threshold.

The aging module 1305 is configured to age the flow entry according to the determining result of the matching success threshold.

Optionally, the aging module 1305 is further configured to age the flow entry if the determining result of the matching success threshold is that the matching success quantity reaches the matching success threshold.

Optionally, the aging threshold further includes: a time threshold of the flow entry, and a taking-effect manner of the matching success threshold and the time threshold, and the taking-effect manner is that the matching success threshold first takes effect, and then the time threshold takes effect.

The switch 1300 further includes:
a determining module, configured to: if the determining result of the matching success threshold is that the matching success quantity reaches the matching success threshold, determine a time when the matching success quantity reaches the matching success threshold as a start time of an aging time of the flow entry.

The judging module 1304 is further configured to determine whether the aging time reaches the time threshold.

The aging module 1305 is further configured to age the flow entry if the aging time reaches the time threshold.

Optionally, the switch 1300 further includes:
a first sending module, configured to: after the aging module 1305 ages the flow entry, send an aging reason of the flow entry to a controller, where the aging reason includes: the aging time reaches the time threshold after the matching success quantity reaches the matching success threshold.

Optionally, the aging threshold further includes: a time threshold of the flow entry, the matching success threshold of the flow entry, and a taking-effect manner of the time threshold and the matching success threshold, and the taking-effect manner is that the matching success threshold and the time threshold simultaneously take effect.

The judging module 1304 is further configured to: before the aging module 1305 ages the flow entry according to the determining result of the matching success threshold, determine whether an aging time of the flow entry reaches the time threshold, to obtain a determining result of the time threshold, where a start time of the aging time is a time when the switch installs the flow entry.

The aging module 1305 is further configured to age the flow entry according to the determining result of the matching success threshold and the determining result of the time threshold.

Alternatively, the aging module 1305 is further configured to age the flow entry if the determining result of the matching success threshold is that the matching success quantity reaches the matching success threshold, and the determining result of the time threshold is that the aging time does not reach the time threshold.

Optionally, the switch 1300 further includes:
a second sending module, configured to: after the aging module 1305 ages the flow entry if the determining result of the matching success threshold is that the matching success quantity reaches the matching success threshold, and the determining result of the time threshold is that the aging time does not reach the time threshold, send an aging reason of the flow entry to a controller, where the aging reason includes: the matching success quantity reaches the matching success threshold, but the aging time does not reach the time threshold.

Alternatively, the aging module 1305 is further configured to age the flow entry if the determining result of the matching success threshold is that the matching success quantity reaches the matching success threshold, and the determining result of the time threshold is that the aging time reaches the time threshold.

Optionally, the switch 1300 further includes:
a third sending module, configured to: after the aging module 1305 ages the flow entry if the determining result of the matching success threshold is that the matching success quantity reaches the matching success threshold, and the determining result of the time threshold is that the aging time reaches the time threshold, send an aging reason of the flow entry to a controller, where the aging reason includes: the matching success quantity reaches the matching success threshold, and the aging time reaches the time threshold.

Alternatively, the aging module 1305 is further configured to age the flow entry if the determining result of the matching success threshold is that the matching success quantity does not reach the matching success threshold, and the determining result of the time threshold is that the aging time reaches the time threshold.

Optionally, the switch 1300 further includes:
a fourth sending module, configured to: after the aging module 1305 ages the flow entry if the determining result of the matching success threshold is that the matching success quantity does not reach the matching success threshold, and the determining result of the time threshold is that the aging time reaches the time threshold, send an aging reason of the flow entry to a controller, where the aging reason includes: the matching success quantity does not reach the matching success threshold, but the aging time reaches the time threshold.

Optionally, the receiving module 1302 is further configured to receive the flow entry sent by the controller, where the flow entry includes the aging threshold.

The switch provided in Embodiment 6 of the present invention may perform the flow entry aging method described in any one of Embodiment 1 to Embodiment 3. For a specific implementation process and technical effects of the switch, refer to the foregoing embodiments. Details are not described herein.

### Embodiment 7

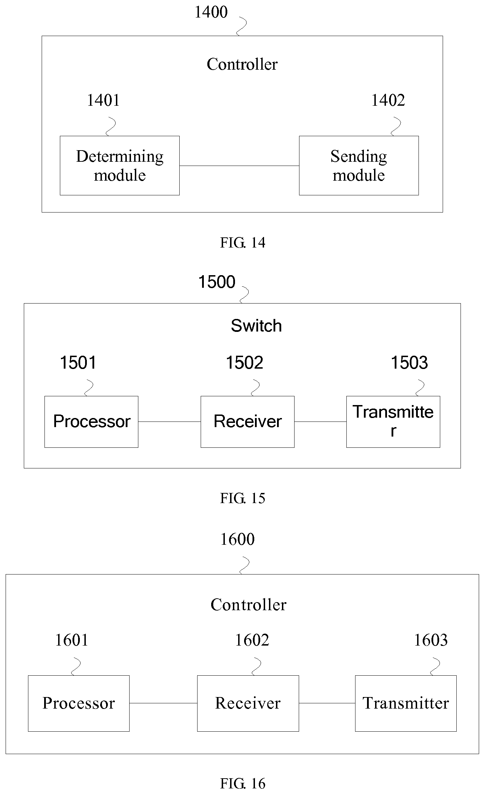

Embodiment 7 of the present invention further provides a controller. FIG. 14 is a schematic structural diagram of the controller according to Embodiment 7 of the present invention. As shown in FIG. 14, the controller 1400 may include a determining module 1401 and a sending module 1402.

The determining module 1401 is configured to determine an aging threshold of a flow entry, where the aging threshold includes a matching success threshold of the flow entry.

The sending module 1402 is configured to send the aging threshold of the flow entry to a switch, where the aging threshold of the flow entry is used to enable the switch to age the flow entry according to the matching success threshold.

Optionally, the aging threshold further includes: a time threshold of the flow entry, and a taking-effect manner of the matching success threshold and the time threshold, and the taking-effect manner is that the matching success threshold and the time threshold simultaneously take effect.

The controller 1400 further includes:
a first receiving module, configured to receive an aging reason that is of the flow entry and that is sent by the switch, where the aging reason includes: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, where a start time of the aging time is a time when the switch installs the flow entry.

Optionally, the aging threshold further includes: a time threshold of the flow entry, and a taking-effect manner of the matching success threshold and the time threshold, and the taking-effect manner is that the matching success threshold first takes effect, and then the time threshold takes effect.

The controller 1400 further includes:
a second receiving module, configured to receive an aging reason that is of the flow entry and that is sent by the switch, where the aging reason includes: an aging time reaches the time threshold after a matching success quantity reaches the matching success threshold.

The controller provided in Embodiment 7 of the present invention may perform the flow entry aging method described in Embodiment 4. For a specific implementation process and technical effects of the controller, refer to the foregoing embodiment. Details are not described herein.

### Embodiment 8

Embodiment 8 of the present invention further provides a switch. FIG. 15 is a schematic structural diagram of the switch according to Embodiment 8 of the present invention. As shown in FIG. 15, the switch 1500 may include: a processor 1501, a receiver 1502, and a transmitter 1503.

The processor 1501 is configured to obtain an aging threshold of a flow entry, where the aging threshold includes a matching success threshold of the flow entry.

The receiver 1502 is configured to receive a data packet.

The processor 1501 is further configured to: match the data packet and the flow entry, and count a matching success quantity; determine whether the matching success quantity reaches the matching success threshold, to obtain a determining result of the matching success threshold; and age the flow entry according to the determining result of the matching success threshold.

Optionally, the processor 1501 is further configured to age the flow entry if the determining result of the matching success threshold is that the matching success quantity reaches the matching success threshold.

Optionally, the aging threshold further includes: a time threshold of the flow entry, and a taking-effect manner of the matching success threshold and the time threshold, and the taking-effect manner is that the matching success threshold first takes effect, and then the time threshold takes effect.

The processor 1501 is further configured to: if the determining result of the matching success threshold is that the matching success quantity reaches the matching success threshold, determine a time when the matching success quantity reaches the matching success threshold as a start time of an aging time of the flow entry; determine whether the aging time reaches the time threshold; and age the flow entry if the aging time reaches the time threshold.

Optionally, the transmitter 1503 is configured to send an aging reason of the flow entry to a controller, where the aging reason includes: the aging time reaches the time threshold after the matching success quantity reaches the matching success threshold.

Optionally, the aging threshold further includes: a time threshold of the flow entry, the matching success threshold of the flow entry, and a taking-effect manner of the time threshold and the matching success threshold, and the taking-effect manner is that the matching success threshold and the time threshold simultaneously take effect.

The processor 1501 is further configured to: before aging the flow entry according to the determining result of the matching success threshold, determine whether an aging time of the flow entry reaches the time threshold, to obtain a determining result of the time threshold, where a start time of the aging time is a time when the switch installs the flow entry; and age the flow entry according to the determining result of the matching success threshold and the determining result of the time threshold.

The processor 1501 is further configured to age the flow entry if the determining result of the matching success threshold is that the matching success quantity reaches the matching success threshold, and the determining result of the time threshold is that the aging time does not reach the time threshold.

Optionally, the transmitter 1503 is further configured to send an aging reason of the flow entry to a controller, where the aging reason includes: the matching success quantity reaches the matching success threshold, but the aging time does not reach the time threshold.

Alternatively, the processor 1501 is further configured to age the flow entry if the determining result of the matching success threshold is that the matching success quantity reaches the matching success threshold, and the determining result of the time threshold is that the aging time reaches the time threshold.

Optionally, the transmitter 1503 is further configured to send an aging reason of the flow entry to a controller, where the aging reason includes: the matching success quantity reaches the matching success threshold, and the aging time reaches the time threshold.

Alternatively, the processor 1501 is further configured to age the flow entry if the determining result of the matching success threshold is that the matching success quantity does not reach the matching success threshold, and the determining result of the time threshold is that the aging time reaches the time threshold.

Optionally, the transmitter 1503 is further configured to send an aging reason of the flow entry to a controller, where the aging reason includes: the matching success quantity does not reach the matching success threshold, but the aging time reaches the time threshold.

Optionally, the receiver 1502 is further configured to receive the flow entry sent by the controller, where the flow entry includes the aging threshold.

The switch provided in Embodiment 8 of the present invention may perform the flow entry aging method described in any one of Embodiment 1 to Embodiment 3. For a specific implementation process and technical effects of the switch, refer to the foregoing embodiments. Details are not described herein.

### Embodiment 9

Embodiment 9 of the present invention further provides a controller. FIG. 16 is a schematic structural diagram of the controller according to Embodiment 9 of the present invention. As shown in FIG. 16, the controller 1600 includes: a processor 1601, a receiver 1602, and a transmitter 1603.

The processor 1601 is configured to determine an aging threshold of a flow entry, where the aging threshold includes a matching success threshold of the flow entry.

The transmitter 1603 is configured to send the aging threshold of the flow entry to a switch, where the aging threshold of the flow entry is used to enable the switch to age the flow entry according to the matching success threshold.

Optionally, the aging threshold further includes: a time threshold of the flow entry, and a taking-effect manner of the matching success threshold and the time threshold, and the taking-effect manner is that the matching success threshold and the time threshold simultaneously take effect.

The receiver 1602 is configured to receive an aging reason that is of the flow entry and that is sent by the switch, where the aging reason includes: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, where a start time of the aging time is a time when the switch installs the flow entry.

Alternatively, the aging threshold further includes: a time threshold of the flow entry, and a taking-effect manner of the matching success threshold and the time threshold, and the taking-effect manner is that the matching success threshold first takes effect, and then the time threshold takes effect.

The receiver 1602 is further configured to receive an aging reason that is of the flow entry and that is sent by the switch, where the aging reason includes: an aging time reaches the time threshold after a matching success quantity reaches the matching success threshold.

The controller provided in Embodiment 9 of the present invention may perform the flow entry aging method described in Embodiment 4. For a specific implementation process and technical effects of the controller, refer to the foregoing embodiment. Details are not described herein.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A flow entry aging method, comprising:
obtaining, by a switch, an aging threshold of a flow entry, wherein the aging threshold comprises a matching success threshold of the flow entry;
receiving, by the switch, a data packet;
matching, by the switch, the data packet and the flow entry, and counting a matching success quantity;
determining, by the switch, whether the matching success quantity reaches the matching success threshold, to obtain a determining result of the matching success threshold; and
aging, by the switch, the flow entry according to the determining result of the matching success threshold.

2. The method according to claim 1, wherein the aging, by the switch, the flow entry according to the determining result of the matching success threshold comprises:
aging, by the switch, the flow entry if the determining result of the matching success threshold is that the matching success quantity reaches the matching success threshold.

3. The method according to claim 2, wherein the aging threshold further comprises: a time threshold of the flow entry, and a taking-effect manner of the matching success threshold and the time threshold, and the taking-effect manner is that the matching success threshold first takes effect, and then the time threshold takes effect; and
the aging, by the switch, the flow entry if the determining result of the matching success threshold is that the matching success quantity reaches the matching success threshold comprises:
if the determining result of the matching success threshold is that the matching success quantity reaches the matching success threshold, determining, by the switch, a time when the matching success quantity reaches the matching success threshold as a start time of an aging time of the flow entry;
determining, by the switch, whether the aging time reaches the time threshold; and
aging, by the switch, the flow entry if the aging time reaches the time threshold.

4. The method according to claim 3, wherein after the aging, by the switch, the flow entry if the aging time reaches the time threshold, the method further comprises:
sending, by the switch, an aging reason of the flow entry to a controller, wherein the aging reason comprises: the aging time reaches the time threshold after the matching success quantity reaches the matching success threshold.

5. The method according to claim 1, wherein the aging threshold further comprises: a time threshold of the flow entry, the matching success threshold of the flow entry, and a taking-effect manner of the time threshold and the matching success threshold, and the taking-effect manner is that the matching success threshold and the time threshold simultaneously take effect;
before the aging, by the switch, the flow entry according to the determining result of the matching success threshold, the method further comprises:
determining, by the switch, whether an aging time of the flow entry reaches the time threshold, to obtain a determining result of the time threshold, wherein a start time of the aging time is a time when the switch installs the flow entry; and
the aging, by the switch, the flow entry according to the determining result of the matching success threshold comprises:
aging, by the switch, the flow entry according to the determining result of the matching success threshold and the determining result of the time threshold.

6. The method according to claim 5, wherein the aging, by the switch, the flow entry according to the determining result of the matching success threshold and the determining result of the time threshold comprises:
aging, by the switch, the flow entry if the determining result of the matching success threshold is that the matching success quantity reaches the matching success threshold, and the determining result of the time threshold is that the aging time does not reach the time threshold.

7. The method according to claim 6, wherein after the aging, by the switch, the flow entry if the determining result of the matching success threshold is that the matching success quantity reaches the matching success threshold, and the determining result of the time threshold is that the aging time does not reach the time threshold, the method further comprises:
sending, by the switch, an aging reason of the flow entry to a controller, wherein the aging reason comprises: the matching success quantity reaches the matching success threshold, but the aging time does not reach the time threshold.

8. The method according to claim 5, wherein the aging, by the switch, the flow entry according to the determining result of the matching success threshold and the determining result of the time threshold comprises:
aging, by the switch, the flow entry if the determining result of the matching success threshold is that the matching success quantity reaches the matching success threshold, and the determining result of the time threshold is that the aging time reaches the time threshold.

9. The method according to claim 8, wherein after the aging, by the switch, the flow entry if the determining result of the matching success threshold is that the matching success quantity reaches the matching success threshold, and the determining result of the time threshold is that the aging time reaches the time threshold, the method further comprises:
sending, by the switch, an aging reason of the flow entry to a controller, wherein the aging reason comprises: the matching success quantity reaches the matching success threshold, and the aging time reaches the time threshold.

10. The method according to claim 5, wherein the aging, by the switch, the flow entry according to the determining result of the matching success threshold and the determining result of the time threshold comprises:
aging, by the switch, the flow entry if the determining result of the matching success threshold is that the matching success quantity does not reach the matching success threshold, and the determining result of the time threshold is that the aging time reaches the time threshold.

11. The method according to claim 10, wherein after the aging, by the switch, the flow entry if the determining result of the matching success threshold is that the matching success quantity does not reach the matching success threshold, and the determining result of the time threshold is that the aging time reaches the time threshold, the method further comprises:
sending, by the switch, an aging reason of the flow entry to a controller, wherein the aging reason comprises: the matching success quantity does not reach the matching success threshold, but the aging time reaches the time threshold.

12. The method according to any one of claims 1 to 11, wherein the obtaining, by a switch, an aging threshold of a flow entry comprises:
receiving, by the switch, the flow entry sent by the controller, wherein the flow entry comprises the aging threshold.

13. A flow entry aging method, comprising:
determining, by a controller, an aging threshold of a flow entry, wherein the aging threshold comprises a matching success threshold of the flow entry; and
sending, by the controller, the aging threshold of the flow entry to a switch, wherein the aging threshold of the flow entry is used to enable the switch to age the flow entry according to the matching success threshold.

14. The method according to claim 13, wherein the aging threshold further comprises: a time threshold of the flow entry, and a taking-effect manner of the matching success threshold and the time threshold, and the taking-effect manner is that the matching success threshold and the time threshold simultaneously take effect; and
the method further comprises:
receiving, by the controller, an aging reason that is of the flow entry and that is sent by the switch, wherein
the aging reason comprises: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, wherein a start time of the aging time is a time when the switch installs the flow entry.

15. The method according to claim 13, wherein the aging threshold further comprises: a time threshold of the flow entry, and a taking-effect manner of the matching success threshold and the time threshold, and the taking-effect manner is that the matching success threshold first takes effect, and then the time threshold takes effect; and
the method further comprises:
receiving, by the controller, an aging reason that is of the flow entry and that is sent by the switch, wherein the aging reason comprises: an aging time reaches the time threshold after a matching success quantity reaches the matching success threshold.

16. A switch, comprising:
an obtaining module, configured to obtain an aging threshold of a flow entry, wherein the aging threshold comprises a matching success threshold of the flow entry;
a receiving module, configured to receive a data packet;
a matching module, configured to match the data packet and the flow entry;
a counting module, configured to count a matching success quantity;
a judging module, configured to determine whether the matching success quantity reaches the matching success threshold, to obtain a determining result of the matching success threshold; and
an aging module, configured to age the flow entry according to the determining result of the matching success threshold.

17. The switch according to claim 16, wherein:
the aging module is further configured to age the flow entry if the determining result of the matching success threshold is that the matching success quantity reaches the matching success threshold.

18. The switch according to claim 17, wherein the aging threshold further comprises: a time threshold of the flow entry, and a taking-effect manner of the matching success threshold and the time threshold, and the taking-effect manner is that the matching success threshold first takes effect, and then the time threshold takes effect; and
the switch further comprises:
a determining module, configured to: if the determining result of the matching success threshold is that the matching success quantity reaches the matching success threshold, determine a time when the matching success quantity reaches the matching success threshold as a start time of an aging time of the flow entry, wherein
the judging module is further configured to determine whether the aging time reaches the time threshold; and
the aging module is further configured to age the flow entry if the aging time reaches the time threshold.

19. The switch according to claim 18, wherein the switch further comprises:
a first sending module, configured to: after the aging module ages the flow entry, send an aging reason of the flow entry to a controller, wherein the aging reason comprises: the aging time reaches the time threshold after the matching success quantity reaches the matching success threshold.

20. The switch according to claim 16, wherein the aging threshold further comprises: a time threshold of the flow entry, the matching success threshold of the flow entry, and a taking-effect manner of the time threshold and the matching success threshold, and the taking-effect manner is that the matching success threshold and the time threshold simultaneously take effect;
the judging module is further configured to: before the aging module ages the flow entry according to the determining result of the matching success threshold, determine whether an aging time of the flow entry reaches the time threshold, to obtain a determining result of the time threshold, wherein a start time of the aging time is a time when the switch installs the flow entry; and
the aging module is further configured to age the flow entry according to the determining result of the matching success threshold and the determining result of the time threshold.

21. The switch according to claim 20, wherein:
the aging module is further configured to age the flow entry if the determining result of the matching success threshold is that the matching success quantity reaches the matching success threshold, and the determining result of the time threshold is that the aging time does not reach the time threshold.

22. The switch according to claim 21, wherein the switch further comprises:
a second sending module, configured to: after the aging module ages the flow entry if the determining result of the matching success threshold is that the matching success quantity reaches the matching success threshold, and the determining result of the time threshold is that the aging time does not reach the time threshold, send an aging reason of the flow entry to a controller, wherein the aging reason comprises: the matching success quantity reaches the matching success threshold, but the aging time does not reach the time threshold.

23. The switch according to claim 20, wherein:
the aging module is further configured to age the flow entry if the determining result of the matching success threshold is that the matching success quantity reaches the matching success threshold, and the determining result of the time threshold is that the aging time reaches the time threshold.

24. The switch according to claim 23, wherein the switch further comprises:
a third sending module, configured to: after the aging module ages the flow entry if the determining result of the matching success threshold is that the matching success quantity reaches the matching success threshold, and the determining result of the time threshold is that the aging time reaches the time threshold, send an aging reason of the flow entry to a controller, wherein the aging reason comprises: the matching success quantity reaches the matching success threshold, and the aging time reaches the time threshold.

25. The switch according to claim 20, wherein:
the aging module is further configured to age the flow entry if the determining result of the matching success threshold is that the matching success quantity does not reach the matching success threshold, and the determining result of the time threshold is that the aging time reaches the time threshold.

26. The switch according to claim 25, wherein the switch further comprises:
a fourth sending module, configured to: after the aging module ages the flow entry if the determining result of the matching success threshold is that the matching success quantity does not reach the matching success threshold, and the determining result of the time threshold is that the aging time reaches the time threshold, send an aging reason of the flow entry to a controller, wherein the aging reason comprises: the matching success quantity does not reach the matching success threshold, but the aging time reaches the time threshold.

27. The switch according to any one of claims 16 to 26, wherein:
the receiving module is further configured to receive the flow entry sent by the controller, wherein the flow entry comprises the aging threshold.

28. A controller, comprising:
a determining module, configured to determine an aging threshold of a flow entry, wherein the aging threshold comprises a matching success threshold of the flow entry; and
a sending module, configured to send the aging threshold of the flow entry to a switch, wherein the aging threshold of the flow entry is used to enable the switch to age the flow entry according to the matching success threshold.

29. The controller according to claim 28, wherein the aging threshold further comprises: a time threshold of the flow entry, and a taking-effect manner of the matching success threshold and the time threshold, and the taking-effect manner is that the matching success threshold and the time threshold simultaneously take effect; and
the controller further comprises:
a first receiving module, configured to receive an aging reason that is of the flow entry and that is sent by the switch, wherein the aging reason comprises: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, wherein a start time of the aging time is a time when the switch installs the flow entry.

30. The controller according to claim 28, wherein the aging threshold further comprises: a time threshold of the flow entry, and a taking-effect manner of the matching success threshold and the time threshold, and the taking-effect manner is that the matching success threshold first takes effect, and then the time threshold takes effect; and
the controller further comprises:
a second receiving module, configured to receive an aging reason that is of the flow entry and that is sent by the switch, wherein the aging reason comprises: an aging time reaches the time threshold after a matching success quantity reaches the matching success threshold.

31. A switch, comprising a processor, a receiver, and a transmitter, wherein
the processor is configured to obtain an aging threshold of a flow entry, wherein the aging threshold comprises a matching success threshold of the flow entry;
the receiver is configured to receive a data packet; and
the processor is further configured to: match the data packet and the flow entry, and count a matching success quantity; determine whether the matching success quantity reaches the matching success threshold, to obtain a determining result of the matching success threshold; and age the flow entry according to the determining result of the matching success threshold.

32. The switch according to claim 31, wherein:
the processor is further configured to age the flow entry if the determining result of the matching success threshold is that the matching success quantity reaches the matching success threshold.

33. The switch according to claim 32, wherein the aging threshold further comprises: a time threshold of the flow entry, and a taking-effect manner of the matching success threshold and the time threshold, and the taking-effect manner is that the matching success threshold first takes effect, and then the time threshold takes effect; and
the processor is further configured to: if the determining result of the matching success threshold is that the matching success quantity reaches the matching success threshold, determine a time when the matching success quantity reaches the matching success threshold as a start time of an aging time of the flow entry; determine whether the aging time reaches the time threshold; and age the flow entry if the aging time reaches the time threshold.

34. The switch according to claim 33, wherein:
the transmitter is configured to send an aging reason of the flow entry to a controller, wherein the aging reason comprises: the aging time reaches the time threshold after the matching success quantity reaches the matching success threshold.

35. The switch according to claim 31, wherein the aging threshold further comprises: a time threshold of the flow entry, the matching success threshold of the flow entry, and a taking-effect manner of the time threshold and the matching success threshold, and the taking-effect manner is that the matching success threshold and the time threshold simultaneously take effect; and
the processor is further configured to: before aging the flow entry according to the determining result of the matching success threshold, determine whether an aging time of the flow entry reaches the time threshold, to obtain a determining result of the time threshold, wherein a start time of the aging time is a time when the switch installs the flow entry; and age the flow entry according to the determining result of the matching success threshold and the determining result of the time threshold.

36. The switch according to claim 35, wherein:
the processor is further configured to age the flow entry if the determining result of the matching success threshold is that the matching success quantity reaches the matching success threshold, and the determining result of the time threshold is that the aging time does not reach the time threshold.

37. The switch according to claim 36, wherein:
the transmitter is further configured to send an aging reason of the flow entry to a controller, wherein the aging reason comprises: the matching success quantity reaches the matching success threshold, but the aging time does not reach the time threshold.

38. The switch according to claim 35, wherein:
the processor is further configured to age the flow entry if the determining result of the matching success threshold is that the matching success quantity reaches the matching success threshold, and the determining result of the time threshold is that the aging time reaches the time threshold.

39. The switch according to claim 38, wherein:
the transmitter is further configured to send an aging reason of the flow entry to a controller, wherein the aging reason comprises: the matching success quantity reaches the matching success threshold, and the aging time reaches the time threshold.

40. The switch according to claim 35, wherein:
the processor is further configured to age the flow entry if the determining result of the matching success threshold is that the matching success quantity does not reach the matching success threshold, and the determining result of the time threshold is that the aging time reaches the time threshold.

41. The switch according to claim 40, wherein:
the transmitter is further configured to send an aging reason of the flow entry to a controller, wherein the aging reason comprises: the matching success quantity does not reach the matching success threshold, but the aging time reaches the time threshold.

42. The switch according to any one of claims 31 to 41, wherein:
the receiver is further configured to receive the flow entry sent by the controller, wherein the flow entry comprises the aging threshold.

43. A controller, comprising a processor, a receiver, and a transmitter, wherein
the processor is configured to determine an aging threshold of a flow entry, wherein the aging threshold comprises a matching success threshold of the flow entry; and
the transmitter is configured to send the aging threshold of the flow entry to a switch, wherein the aging threshold of the flow entry is used to enable the switch to age the flow entry according to the matching success threshold.

44. The controller according to claim 43, wherein the aging threshold further comprises: a time threshold of the flow entry, and a taking-effect manner of the matching success threshold and the time threshold, and the taking-effect manner is that the matching success threshold and the time threshold simultaneously take effect; and
the receiver is configured to receive an aging reason that is of the flow entry and that is sent by the switch, wherein the aging reason comprises: a matching success quantity reaches the matching success threshold, but an aging time does not reach the time threshold; or a matching success quantity does not reach the matching success threshold, but an aging time reaches the time threshold; or a matching success quantity reaches the matching success threshold, and an aging time reaches the time threshold, wherein a start time of the aging time is a time when the switch installs the flow entry.

45. The controller according to claim 43, wherein the aging threshold further comprises: a time threshold of the flow entry, and a taking-effect manner of the matching success threshold and the time threshold, and the taking-effect manner is that the matching success threshold first takes effect, and then the time threshold takes effect; and
the receiver is further configured to receive an aging reason that is of the flow entry and that is sent by the switch, wherein the aging reason comprises: an aging time reaches the time threshold after a matching success quantity reaches the matching success threshold.
